# EUROPÄISCHE PATENTSCHRIFT

(11) **EP 1 808 286 B1**
(45) Veröffentlichungstag und Bekanntmachung des Hinweises auf die Patenterteilung: **21.04.2010**
(21) Anmeldenummer: 06126511.2
(22) Anmeldetag: 19.12.2006
(51) Int. Cl.: B29C 67/00, B29C 53/08, H04R 25/00, B29C 33/38

(54) **Verfahren zum Formen eines Schallkanals einer Hörvorrichtung**
Method for shaping a sound tube of a hearing aid
Procédé de mise en forme d'un tube auditif pour un appareil de correction auditive

(30) Priorität: 13.01.2006 DE 102006001847
(43) Veröffentlichungstag der Anmeldung: 18.07.2007
(73) Patentinhaber: Siemens Audiologische Technik GmbH, 91058 Erlangen (DE)
(72) Erfinder: Fickweiler, Werner, 91088 Bubenreuth (DE); Klemenz, Harald, 90766 Fürth (DE); Lederer, Marco, 96114 Hirschaid / Erlach (DE)
(74) Vertreter: Maier, Daniel Oliver

(56) Entgegenhaltungen:
- EP-A- 1 626 610
- WO-A-99/04601
- WO-A-2006/056198
- WO-A1-2007/000160
- DE-A1- 3 939 352
- US-A1- 2005 035 498
- US-B1- 6 540 045

## Beschreibung

Die vorliegende Erfindung betrifft ein Verfahren zum Formen eines Schallkanals einer Hörvorrichtung und insbesondere eines Hörgeräts gemäß dem Anspruch 1.

Bei Hinter-dem-Ohr-Hörgeräten (HdO) muss der Schall vom Hörgerät mit Hilfe eines Schlauchstücks zum Gehörgang geleitet werden. Gehörgangsseitig wird das Schlauchstück vielfach durch ein Ohrpassstück gehalten. Das Schlauchstück dient somit als Schallkanal, der den vom Hörgerät verstärkten Schall zum Gehörgang transportiert.

Aus kosmetischen Gründen ist es vorteilhaft, wenn der Schallschlauch so eng wie möglich an der Ohrmuschel geführt wird. Daher muss er möglichst gut an die Außenkontur der Ohrmuschel angepasst sein. Problematisch hierbei ist, dass die Schallschläuche für unterschiedliche Hörgeräteträger die verschiedensten Formen besitzen müssen. So sind abgesehen von den Konturen beispielsweise bei Kindern wesentlich kürzere Schallschläuche einzusetzen als bei erwachsenen Personen.

Die Form des Schallschlauchs hängt somit nicht nur von der individuellen Kontur des Ohrs des Hörgeräteträgers ab, sondern auch von der Form des Hörgeräts selbst und von der Art des Ohrpassstücks. Auch der Durchmesser des Schlauchstücks variiert von Anwendung zu Anwendung. Des Weiteren verfügen die vorgefertigten Schläuche vielfach bereits über die notwendigen Adapterstücke zum Anschluss an das Hörgerät sowie an das Ohrpassstück. In diesem Fall ist es notwendig, die Adapterstücke an den Schlauchenden in die gewünschte räumliche Position und Ausrichtung zu bringen.

Auch in In-dem-Ohr-Hörgeräten sind meist Schallschläuche vorgesehen, die eine sehr spezielle Form besitzen müssen. Diese Form hängt maßgeblich von der Hörgeräteschale ab, welche ihrerseits individuell an den Hörgeräteträger angepasst ist.

Aufgrund der zahlreichen verschiedenen Formen von Schallkanälen in und an Hörgeräten werden diese bislang meist von Hand individuell gefertigt. Hierzu werden die Schallschläuche in der Regel über einem Heißluftgebläse verformt. Alternativ werden auch sogenannte "Nagelbretter" eingesetzt, bei denen die Schläuche mit Nägeln oder Stiften fixiert und anschließend in einem Heizofen erwärmt werden. Nach dem Abkühlen besitzen sie dann die gewünschte Form. Diese manuelle Fertigung ist jedoch sehr arbeitsaufwendig und verursacht entsprechend hohe Kosten.

Aus der Druckschrift DE 39 39 352 A1 ist eine Vorrichtung zum Biegen von kleinkalibrigen Rohrstücken aus thermoplastischen Kunststoffen bekannt. Dabei werden die Rohrstücke bei Normaltemperatur in eine Biegeform eingelegt und verspannt. Anschließend wird Wärme zugeführt. Nach dem Abkühlen wird das Rohrstück aus der Biegeform entnommen.

Auch aus den Druckschriften DE 42 15 920 A1 und DE 696 13 130 T2 sind Verfahren zum Biegen von Kunststoffrohren bekannt, bei denen Erwärmung und Abkühlung sowie geeignete Formen genutzt werden.

Aus der nachveröffentlichten Druckschrift WO 2007/000160 A1 ist ein Verfahren zum Formen eines länglichen, verformbaren Elements, vorzugsweise eines Schlauchs für ein HdO- Hörgerät, mittels eines Werkszeugs, sowie ein Verfahren zur Herstellung des Werkszeugs, bekannt. Das Formen des Elements wird durch Einlegen des Elements in das Werkzeug, Erwärmen des Elements, und Abkühlen des Elements durchgeführt. Das Werkzeug wird mittels eines Rapid-Prototyping-Verfahrens, auf der Basis numerischer Daten, die durch Vermessung des Patientenohrs gewonnen wurden, erzeugt.

Aus der Druckschrift WO 99/04601 A1 ist ein HdO-Hörgerät bekannt, das einen Schallkanal aufweist, an dessen einem Ende ein ins Ohr einzuführender Stopfen, der den Schall ins Ohr überträgt, und an dessen anderem Ende ein Adapter für ein Hörgerät angeordnet ist. Der aus einem Schlauch bestehende Schallkanal wird individuell für jeden Patienten geformt. Das Formen wird mittels eines vorgeformten Drahtstücks durch Erwärmen des Schlauchs, Einbringen des Drahtstücks in den Schlauch, Abkühlen des Schlauchs und Abziehen des Drahtstücks aus dem Schlauch durchgeführt.

Aus der Druckschrift US 2005/0035498 A1 ist ein Verfahren zum Einsatz von Rapid-Prototyping-Verfahren für die Herstellung von Gießformen für das Formen von Hörgeräteschalen bekannt. Das Verfahren umfasst die Aufnahme von Messdaten des Hörkanals, die Verarbeitung der Messdaten und das Generieren der negativen Gießform aus den Messdaten unter Einsatz von Rapid-Prototyping.

Die Aufgabe der vorliegenden Erfindung besteht somit darin, das Verformen von Schallkanälen bzw. Schallschläuchen zeit- und kostengünstiger zu gestalten.

Erfindungsgemäß wird diese Aufgabe gelöst durch ein Verfahren zum Formen eines Schallkanal einer Hörvorrichtung, insbesondere eines Hörgeräts, gemäß dem Anspruch 1. Mit der modell-basierten Gestaltung lässt sich die Kontur einer Biegeform mit wenig Aufwand rasch festlegen.

In vorteilhafter Weise ist es somit möglich, Biegeformen für Hörvorrichtungen und insbesondere für Hörgeräte sehr rasch herzustellen, so dass die Anfertigung von Biegeformen auch für zahlreiche unterschiedliche Schlauchformen lohnt. Außerdem lässt sich mit derartigen Biegeformen der Automatisierungsgrad bei der Herstellung der Schallschläuche erhöhen.

Der mindestens eine Parameter des 3D-Modells kann beispielsweise der Durchmesser oder die Länge des Schlauchs sein. Damit ist nicht nur die Form des Schlauchs, sondern auch seine Abmessung individuell einstellbar.

Das Prototyping-Verfahren bzw. Rapid-Prototyping-Verfahren kann Stereo-Lithographie (STL), selektives Laser-Sintern (SLS) etc. beinhalten. Mit diesen konstruktiven Verfahren können Formen hergestellt werden, die durch übliche Gussverfahren nicht oder nicht ohne weiteres herzustellen sind.

Bei einer bevorzugten Ausführungsform des erfindungsgemäßen Verfahrens ist der Schlauch zur Verbindung eines Hinter-dem-Ohr-Hörgeräts mit einem Ohrpassstück ausgelegt. Der Schlauch kann aber auch zum Einsatz als hörgeräte-internes Schlauchstück ausgelegt sein. In beiden Fällen ist es somit möglich, für die individuelle Anatomie eines Hörgeräteträgers rasch eine geeignete Biegeform zu erstellen.

Die vorliegende Erfindung wird nun anhand der beigefügten Zeichnungen näher erläutert, in denen zeigen:
FIG 1 eine mit einem Rapid-Prototyping-Verfahren hergestellte Biegeform und ein zu biegender Hörgeräteschlauch in dreidimensionaler Darstellung und
FIG 2 eine dreidimensionale Ansicht der Biegeform von FIG 1, in die der Hörgeräteschlauch eingesetzt ist.

Das nachfolgend näher geschilderte Ausführungsbeispiel stellt eine bevorzugte Ausführungsform der vorliegenden Erfindung dar.

Der Erfindung liegt der Gedanke zugrunde, eine Biegeform herzustellen, die einerseits rasch herzustellen ist und andererseits rasch verändert werden kann. Hierzu wird das Rapid-Prototyping-Verfahren zur Herstellung von Kunststoffformen verwendet. Die benötigte Biegeform kann also kurzfristig durch Veränderung einer Vorgabe erstellt und somit auf neue Anforderungen eingestellt werden. Grundlage dabei ist ein dreidimensionales Modell, in welchem frei wählbare Parameter angelegt sind, um beispielsweise Radien, Längen usw. zu ändern. Ist die gewünschte Form einschließlich der entsprechenden Parameter gefunden, wird ein STL-Modell davon abgeleitet. Hierzu wird eine STL-Schnittstelle (Standard Transformation Language) verwendet, bei der es sich um eine Standardschnittstelle vieler CAD-Systeme handelt. Dieses Daten-Interface, das auch als Stereo-Lithographie-Schnittstelle bezeichnet wird, dient hauptsächlich der Bereitstellung geometrischer Informationen aus dreidimensionalen Datenmodellen heraus für die Fertigung mittels generativer Fertigungsverfahren oder Rapid-Prototyping-Anlagen. Dies ermöglicht die geschlossene Beschreibung der Oberfläche von 3D-Körpern mit Hilfe von Dreiecksfacetten. Jede Dreiecksfacette wird durch die Dreieckspunkte und die zugehörige Flächennormale des Dreiecks charakterisiert. Diese gesamten geometrischen Werte werden in definierter Form für die weitere Datenaufbereitung im Bauprozess benötigt.

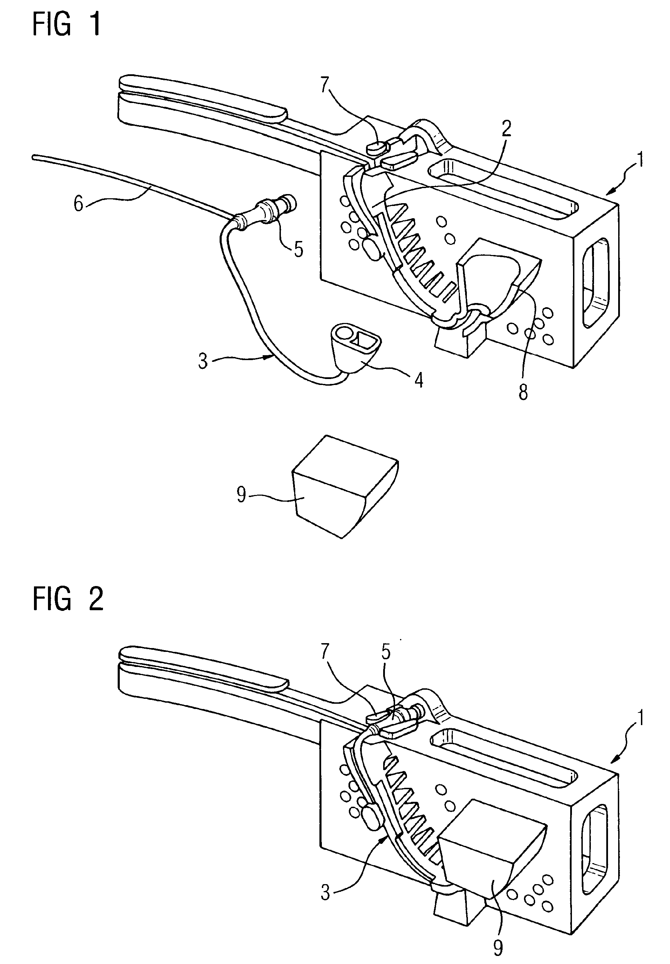

Die STL-Daten werden nun beispielsweise einem stereolithographischen Verfahren zugeleitet und es wird eine Biegeform 1 erstellt, wie sie in FIG 1 dreidimensional wiedergegeben ist. Die Biegeform 1 besitzt einen Steg 2, in den ein zu biegender Schlauch 3 eingelegt werden muss. An einem Ende besitzt der Schlauch 3 einen Hörgeräteadapter 4, mit dem er an ein Hörgerät angeschlossen wird. Am anderen Ende des Schlauchs 3 befindet sich ein Ohrpassstückadapter 5, der in ein entsprechendes Ohrpassstück gesteckt wird. An diesen Adapter 5 ist auch ein flexibles, längliches Haltestück 6 angebracht, das in eine Vertiefung der Ohrmuschel des Hörgeräteträgers zur Fixierung des Schlauchs bzw. des Ohrpassstücks eingelegt wird.

Die Biegeform 1 weist eine erste Adapterhalterung 7 auf, in die der Ohrpassstückadapter 5 eingeschnappt werden kann. Darüber hinaus ist an der Biegeform 1 auch eine zweite Adapteraufnahme 8 vorgesehen, in die der Hörgeräteadapter 4 einlegbar ist. Ein Halteelement 9 wird auf die zweite Adapteraufnahme 8 aufgesteckt, um den Hörgeräteadapter 4 im Inneren der Adapteraufnahme 8 zu halten. Durch die beiden Adapteraufnahmen 7 und 8 ist die genaue räumliche Lage und Orientierung der beiden Schlauchadapter 4 und 5 zueinander festgelegt. Der Steg 2 bestimmt den Schlauchverlauf zwischen den beiden Adaptern 4, 5.

FIG 2 zeigt den Zustand, in dem der Schlauch 3 in die Biegeform 1 eingelegt und fixiert ist. In diesem Zustand wird der Schlauch mit Wärme, z.B. in einem Ofen, zur thermischen Verformung beaufschlagt. Nach dem Abkühlen behält der Schlauch 3 die vorgegebene Form und kann für das individuelle Hörgerät verwendet werden.

Die Beaufschlagung des in die Biegeform 1 eingespannten Schlauchs 3 mit Wärme kann auch durch Mikrowellenbestrahlung, Infrarotbestrahlung und andere Bestrahlungsvarianten erreicht werden. Selbstverständlich besteht die Möglichkeit, die Biegeform mit dem Schlauch wie eingangs erwähnt mit einem Heißluftgebläse zu erwärmen.

Soll nun ein neuer Schlauch hergestellt werden, so kann ausgehend von einer bestehenden Schlauchform, für die ein dreidimensionales Modell vorliegt, durch entsprechende Neuparametrisierung eine neue Biegeform erstellt werden. Diese vereinfachte Herstellung der Biegeformen lohnt sich auch beim Biegen nur weniger Schläuche. Außerdem können mit dem Rapid-Prototyping-Verfahren Biegeformen sehr kostengünstig dupliziert werden. Hierbei führt das rechnergestützte Herstellungsverfahren zu einer hohen Reproduktionsgenauigkeit für die Duplikate.

## Patentansprüche

1. Verfahren zum Formen eines Schallkanals (3) einer Hörvorrichtung
**gekennzeichnet durch**
- Einlegen eines ungeformten Schlauchs in eine Biegeform (1),
- Beaufschlagung der Biegeform (1) einschließlich des eingelegten Schlauchs mit Wärme, so dass der Schlauch dauerhaft nach dem Abkühlen die von der Biegeform vorgegebene Gestalt für den Schallkanal annimmt, und
- Erzeugen der Biegeform (1) für den Schallkanal (3) mit Hilfe eines Rapid-Prototyping-Verfahrens, **wobei**
- zur Erzeugung der Biegeform (1) ein 3D-Modell, das eine geometrische Form eines Schallkanals (3) beschreibt, mit mindestens einem wählbaren Parameter bereitgestellt und in geeigneter Weise parametrisiert wird.

2. Verfahren nach Anspruch 1,
wobei der mindestens eine Parameter der Durchmesser oder die Länge des Schlauchs ist.

3. Verfahren nach einem der vorhergehenden Ansprüche,
wobei das Prototyping-Verfahren ein stereo-lithographisches Verfahren ist.

4. Verfahren nach einem der vorhergehenden Ansprüche,
wobei der Schlauch zur Verbindung eines Hinter-dem-Ohr-Hörgeräts mit einem Ohrpassstück ausgelegt ist.

5. Verfahren nach einem der Ansprüche 1 bis 3,
wobei der Schlauch zum Einsatz als hörgeräteinternes Schlauchstück ausgelegt ist.

## Claims

1. Method for moulding a sound canal (3) of a hearing device
**characterised by**
- inserting an unmolded tube into a bending mould (1),
- applying heat to the bending mould (1), including the inserted tube, such that after cooling the tube permanently assumes the shape predetermined for the sound canal by the bending mould, and
- generation of the bending mould (1) for the sound canal (3) with the aid of a rapid-prototyping method, wherein,
- to generate the bending mould (1), a 3D model that describes a geometric shape of a sound canal (3) is provided with at least one optional parameter and is parameterized in a suitable manner.

2. Method according to claim 1,
wherein the at least one parameter is the diameter or the length of the tube.

3. Method according to any one of the preceding claims,
wherein the prototyping method is a stereo-lithographic method.

4. Method according to any one of the preceding claims,
wherein the tube for connecting a behind-the-ear hearing instrument is fashioned with an earmold.

5. Method according to any one of claims 1 to 3,
wherein the tube is fashioned for use as a piece of tube within a hearing instrument.

## Revendications

1. Procédé de mise en forme d'un tube ( 3 ) auditif d'une prothèse auditive
**caractérisé en ce que**
- on met un conduit souple non façonné dans un moule ( 1 ) de courbure,
- on soumet le moule ( 1 ) de courbure, y compris le conduit souple qui y est inséré, à de la chaleur, de manière à ce que le conduit souple prenne, d'une manière permanente après le refroidissement, la conformation du tube auditif, qui est prescrite par le moule de courbure, et
- on produit le moule ( 1 ) de courbure pour le tube ( 3 ) auditif à l'aide d'un procédé rapide-prototyping, dans lequel
- pour la production du moule ( 1 ) de courbure, on se procure un modèle en 3D, qui décrit une forme géométrique d'un tube ( 3 ) auditif et qui a au moins un paramètre pouvant être choisi et on le paramètre d'une manière appropriée.

2. Procédé suivant la revendication 1,
dans lequel le au moins un paramètre est le diamètre ou la longueur du conduit souple.

3. Procédé suivant l'une des revendications précédentes,
dans lequel le procédé prototyping est un procédé stéréo-lithographique.

4. Procédé suivant l'une des revendications précédentes,
dans lequel le conduit souple est conçu pour relier une prothèse auditive accrochée derrière l'oreille à une pièce d'adaptation à l'oreille.

5. Procédé suivant l'une des revendications précédentes,
dans lequel le conduit souple est conçu pour être inséré en tant que tronçon de conduit souple interne à la prothèse auditive.
